# EUROPEAN PATENT APPLICATION

(11) **EP 4 670 530 A2**
(43) Date of publication of application: **31.12.2025**
(21) Application number: 25216391.0
(22) Date of filing: 31.05.2022
(51) Int. Cl.: A24F 40/20

(54) **HEATER ASSEMBLY FOR AEROSOL-GENERATING DEVICE AND AEROSOL-GENERATING DEVICE INCLUDING THE SAME**

(30) Priority: 31.05.2021 KR 20210069941
(62) Divisional of application: 22816425.7
(71) Applicant: KT&G Corporation, Daejeon 306-712 (KR)
(72) Inventor: KIM, Dong Sung, 06310 Seoul (KR); KIM, Yong Hwan, 13970 Anyang-si (KR); LEE, Seung Won, 14293 Gwangmyeong-si (KR); JANG, Seok Su, 34337 Daejeon (KR); HAN, Dae Nam, 06344 Seoul (KR)
(74) Representative: Ter Meer Steinmeister & Partner

(57) **Abstract**

A heater assembly for an aerosol-generating device includes a heater configured to heat an aerosol-generating article, a body arranged to surround the aerosol-generating article; a first cover coupled to a side of the body and comprising a first hole for receiving the aerosol-generating article; and a second cover coupled to another side of the body and comprising a second hole for receiving a power line for supplying power to the heater.

## Description

### Technical Field

The disclosure relates to a heater assembly and an aerosol-generating device including the heater assembly, and more particularly, to a heater assembly having improved insulation performance, and an aerosol-generating device including the heater assembly.

### Background Art

Recently, there has been an increasing demand for an aerosol generating device that generates the aerosol without combustion of tobacco. An aerosol generating device may generate the aerosol from aerosol generating material without combustion and have the aerosol pass through a flavor medium before being discharged from the aerosol generating device.

An example of an aerosol-generating device may include a heating-type aerosol-generating device, which includes a heater configured to generate aerosols by heating an aerosol-generating article.

### Disclosure of Invention

### Technical Problem

Heat generated by a heater may heat an aerosol-generating article and may also be transferred to the outside of an aerosol-generating device. In the case of an aerosol-generating device with weak insulation performance, the heat generated from the heater is easily discharged to the outside. In this case, in order to continuously heat the aerosol-generating article at a preset temperature, an amount of power applied to the heater is inevitably increased, and accordingly, operation cost for the heater may increase. In addition, due to increase in a temperature that may be sensed when the user holds the aerosol-generating device, it is difficult to implement a safe usage environment for the aerosol-generating device.

Therefore, to decrease the operation cost for the heater and implement safe use of the aerosol-generating device, an aerosol-generating device with improved heat insulation performance may be required.

Technical aspects, features and advantages to be achieved with respect to the embodiments are not limited to the above-described problems, and embodiments that are not mentioned in the disclosure will be clearly understood by one of ordinary skill in the art from the present disclosure and the accompanying drawings.

### Solution to Problem

The disclosure may implement a heater assembly with improved heat insulation performance and an aerosol-generating device including the heat assembly.

A heater assembly for an aerosol-generating device, according to an embodiment, includes: a heater configured to heat an aerosol-generating article; a body arranged to surround the aerosol-generating article; a first cover coupled to a side of the body and comprising a first hole for receiving the aerosol-generating article; and a second cover coupled to another side of the body and comprising a second hole for receiving a power line for supplying power to the heater, wherein an accommodating space for accommodating the aerosol-generating article is formed by the first cover, the body, and the second cover, and a material configured to reflect the heat generated from the heater to the accommodating space is deposited on an inner surface of at least one of the body, the first cover, and the second cover.

An aerosol-generating device according to an embodiment includes a heater assembly for an aerosol-generating device, according to an embodiment, a battery configured to supply power to the heater assembly for the aerosol-generating device, and a controller configured to control operations of the heater assembly for the aerosol-generating device.

### Advantageous Effects of Invention

The heater assembly for the aerosol-generating device and the aerosol-generating device according to the embodiments described above may reduce an amount of power consumed for operating the heater by improving the insulation performance, thereby reducing an operation cost of the heater.

In addition, the heater assembly for the aerosol-generating device and the aerosol-generating device according to the embodiments described above may reduce a temperature sensed by the user when holding the aerosol-generating device, and thus safety of the aerosol-generating device may be improved.

The effects according to one or embodiments are not limited to the effects described above, and unmentioned effects will be clearly understood by one of ordinary skill in the art from the present specification and the accompanying drawings.

### Brief Description of Drawings

FIG. 1 is a diagram illustrating an example in which an aerosol-generating article is inserted into an aerosol-generating device;
FIG. 2 is a front perspective view of a heater assembly for an aerosol-generating device according to an embodiment;
FIG. 3 is a rear perspective view of a heater assembly for an aerosol-generating device according to an embodiment;
FIG. 4 is an exploded perspective view of a heater assembly for an aerosol-generating device according to an embodiment;
FIG. 5 is a cross-sectional view of a heater assembly for an aerosol-generating device according to an embodiment, taken along line V-V shown in FIG. 2;
FIG. 6 is a cross-sectional view of a heater assembly for an aerosol-generating device according to an embodiment, taken along line VI-VI shown in FIG. 2;
FIG. 7 is a perspective view of a combination of a first cover, a heater, and a holder of a heater assembly for an aerosol-generating device according to an embodiment;
FIG. 8 is a perspective view of a combination of a heater, an antenna, and a sensor of a heater assembly for an aerosol-generating device according to an embodiment;
FIG. 9 is a perspective view of a combination of a first cover and an antenna of a heater assembly for an aerosol-generating device according to an embodiment;
FIG. 10 is a perspective view of a combination of an antenna, a sensor, and a shielding portion of a heater assembly for an aerosol-generating device according to an embodiment;
FIG. 11 is a rear perspective view of a heater assembly for an aerosol-generating device according to an embodiment, for describing a lower sealing coupled to a second cover;
FIG. 12 is an exploded view of a second cover and a lower sealing of a heater assembly for an aerosol-generating device according to an embodiment;
FIG. 13 is a diagram of a second cover of a heater assembly for an aerosol-generating device according to an embodiment;
FIG. 14 is a diagram of a first sealing of a heater assembly for an aerosol-generating device according to an embodiment;
FIG. 15 is a diagram of a second sealing of a heater assembly for an aerosol-generating device according to an embodiment;
FIG. 16 is a cross-sectional view of a heater assembly for an aerosol-generating device according to an embodiment, taken along line XVI-XVI shown in FIG. 11;
FIG. 17 is a perspective view of a combination of a supporter, a heater, and a sensor of a heater assembly for an aerosol-generating device according to an embodiment; and
FIGS. 18 and 19 are diagrams of examples of an aerosol-generating device.

### Best Mode for Carrying out the Invention

A heater assembly for an aerosol-generating device according to an embodiment includes: a heater configured to heat an aerosol-generating article; a body arranged to surround the aerosol-generating article; a first cover coupled to a side of the body and comprising a first hole for receiving the aerosol-generating article; and a second cover coupled to another side of the body and comprising a second hole for receiving a power line for supplying power to the heater, wherein an accommodating space for accommodating the aerosol-generating article is formed by the first cover, the body, and the second cover, and a material configured to reflect the heat generated from the heater to the accommodating space is deposited on an inner surface of at least one of the body, the first cover, and the second cover.

The first cover may include a cover insulation member extending in a length direction of the heater and arranged between the heater and the body.

The cover insulation member may be partially surrounds the heater.

The first cover may include: a first cover body including an insertion hole into which the aerosol-generating article is to be inserted; a first protruding member protruding from the first cover body and including a coupling hole for receiving a coupling member for coupling the first cover to the aerosol-generating device.

The heater assembly for the aerosol-generating device may further include an antenna arranged inside the body to surround at least a portion of the heater and configured to recognize whether the aerosol-generating device is accommodated in the accommodating space.

The antenna may include an antenna body extending in a longitudinal direction of the heater and surrounding at least a portion of the heater, and
the first cover may include a cover insulation member extending in the longitudinal direction and arranged at a position corresponding to the antenna body.

The heater assembly for the aerosol-generating device may further include a sensor arranged inside the body and configured to sense a temperature of the heater, wherein the antenna may include a penetration portion through which a portion of the sensor penetrates.

The heater assembly for the aerosol-generating device may further include a shielding portion arranged between the antenna and the body to surround at least a portion of the antenna.

The heater assembly for the aerosol-generating device may further include a sensor arranged inside the body and configured to sense a temperature of the heater,
wherein the shielding portion may include a sensor penetration groove, through which a portion of the sensor penetrates.

The heater assembly for the aerosol-generating device may further include a lower sealing coupled to the second cover, wherein the second cover may include an inner surface facing the second hole, and the lower sealing may include a first sealing that fills the second hole by contacting the inner surface of the second cover.

The first sealing may be inserted into the second hole by an interference fit manner.

The first sealing may include: a first sealing body inserted into the second hole; a first penetration groove formed in the first sealing body such that a portion of the heater penetrates through the first penetration groove; and a second penetration groove formed in the first sealing body apart from the first penetration groove such that a portion of the sensor penetrates through the second penetration groove.

The second cover may further include an outer surface opposite to the inner surface, and the lower sealing may further include a second sealing arranged at an outer surface of the second cover.

The heater assembly for the aerosol-generating device may further include a supporter arranged in the heater and supporting the heater.

An aerosol-generating device according to an embodiment includes: a heater assembly for the aerosol-generating device; a battery configured to supply power to the heater assembly for the aerosol-generating device; and a controller configured to control operations of the heater assembly for the aerosol-generating device.

### Mode for the Invention

The terms used in the embodiments are general terms currently and widely used in the art in consideration of functions with respect to the present disclosure, but the terms may vary according to the intention of those of ordinary skill in the art, precedents, or new technology in the art. Also, specified terms may be selected by the applicant, and in this case, the detailed meaning thereof will be described in the detailed description of the disclosure. Thus, the terms used in the present disclosure should not be understood as simple names, but should be understood based on the meaning of the terms and the overall description of the present disclosure.

Throughout the specification, when a portion "includes" an element, another element may be further included, rather than excluding the existence of the other element, unless otherwise described. In addition, the terms "unit," "module," etc. described in the specification mean units for processing at least one function or operation and may be implemented by hardware components or software components or combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, embodiments of the present disclosure will be described more fully with reference to the accompanying drawings, in which non-limiting example embodiments of the present disclosure are shown such that one of ordinary skill in the art may easily work the present disclosure. Embodiments of the present disclosure may, however, be embodied in many different forms and should not be construed as being limited to the example embodiments set forth herein.

Terms such as "first" and "second" may be used to describe various components, but the components should not be limited by the terms. The terms are only used to distinguish one component from another.

In addition, some of the components in the drawings may be illustrated with exaggerated sizes or proportions. In addition, the components shown in one figure may not be shown on another figure.

In addition, throughout the specification, the "longitudinal direction" or "length direction" of a component may be a direction in which the component extends along the longest axis of the component. In particular, the longitudinal direction of the heater refers to a direction in which an aerosol generating article (e.g., cigarette) is inserted into the heater assembly.

Throughout the specification, the term "puff" refers to the user's inhalation, and the inhalation may refer to a situation in which air is drawn into the user's mouth, nasal cavity, or lungs through the user's mouth or nose.

Since various embodiments described in the specification are classified arbitrarily only for the purpose of explanation, the embodiments should not be construed to be exclusive to each other. For example, some features disclosed in one embodiment may be applied to or implemented in other embodiments.

Also, it is possible to change some features for applying or implement those features in other embodiments within scope and spirit of this disclosure. In the present disclosure, a singular form also includes a plural form unless specifically stated in otherwise.

The embodiments relate to an insulation structure of a heater. However, the embodiments are not limited to detailed embodiments to be described later, and may include other modifications as long as the modified structure is capable of insulating the heater.

Hereinafter, the present disclosure will be described more fully with reference to the accompanying drawings, in which embodiments of the present disclosure are shown such that one of ordinary skill in the art may easily understand the present disclosure. However, the present disclosure may be embodied in many different forms and should not be construed as being limited to the embodiments set forth herein.

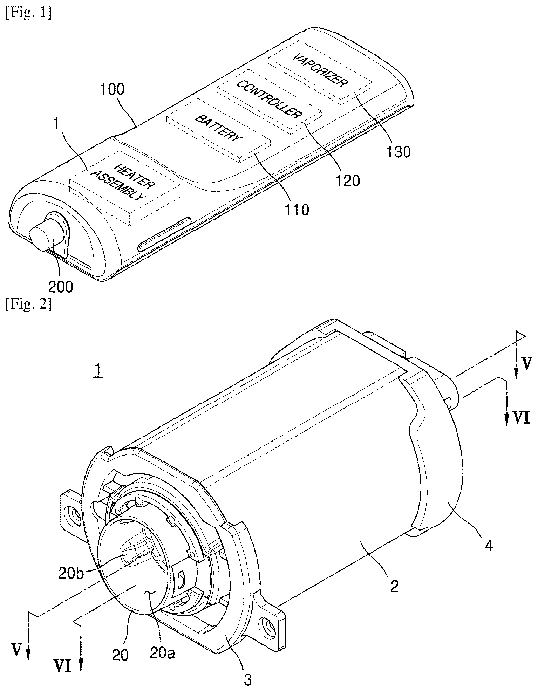

FIG. 1 is a diagram showing an example in which an aerosol generating article is inserted into an aerosol generating device.

Referring to FIG. 1, the aerosol generating device 100 may include a battery 110, a controller 120, and a heater assembly 1.

The aerosol generating device 100 may further include a vaprizor 130. Also, the aerosol generating article 200 may be inserted into an inner space of the aerosol generating device 100.

FIG. 1 illustrates components of the aerosol generating device 100, which are related to the present embodiment. Therefore, it will be understood by one of ordinary skill in the art related to the present embodiment that additional components may be further included in the aerosol generating device 100, in addition to the components illustrated in FIG. 1.

FIG. 1 illustrates that the battery 110, the controller 120, the vaprizor 130, and the heater assembly 1 are arranged in series. But, the internal structure of the aerosol generating device 100 is not limited to the arrangement shown in FIG. 1. In other words, according to the design of the aerosol generating device 100, the battery 110, the controller 120, the vaporizer 130, and the heater assembly 1 may be differently arranged.

When the aerosol generating article 200 is inserted into the aerosol generating device 100, the aerosol generating device 100 heats the heater assembly 1 and/or the vaporizer 130 to generate aerosol from the aerosol generating article 200 and the vaporizer 130. The aerosol generated from the heater assembly 1 and/or the vaporizer 130 may be delivered to a user by passing through the aerosol generating article 200.

As necessary, even when the aerosol generating article 200 is not inserted into the aerosol generating device 100, the aerosol generating device 100 may heat the heater assembly 1.

The battery 110 may supply power to be used for the aerosol generating device 100 to operate. For example, the battery 110 may supply power to heat the heater assembly 1 or the vaporizer 130, and may supply power for operating the controller 120. Also, the battery 110 may supply power for operations of a display, a sensor, a motor, etc. mounted in the aerosol generating device 100.

The controller 120 may generally control operations of the aerosol generating device 100. In detail, the controller 120 may control not only operations of the battery 110, the heater assembly 1, and the vaporizer 130, but also operations of other components included in the aerosol generating device 100. Also, the controller 120 may check a state of each of the components of the aerosol generating device 100 to determine whether or not the aerosol generating device 100 is able to operate.

The controller 120 may include at least one processor. A processor can be implemented as an array of a plurality of logic gates or can be implemented as a combination of a general-purpose microprocessor and a memory in which a program executable in the microprocessor is stored. It will be understood by one of ordinary skill in the art that the processor can be implemented in other forms of hardware.

The heater assembly 1 may be heated by the power supplied from the battery 110. For example, when the aerosol generating article 200 is inserted into the aerosol generating device 100, the heater assembly 1 may be located outside the aerosol generating article 200. Thus, the heated heater assembly 1 may increase a temperature of an aerosol generating material in the aerosol generating article 200.

The heater assembly 1 may include an electro-resistive heater. For example, the heater assembly 1 may include an electrically conductive track, and the heater assembly 1 may be heated when currents flow through the electrically conductive track. However, the heater assembly 1 is not limited to the example described above and may include any other heaters which may be heated to a desired temperature. Here, the desired temperature may be pre-set in the aerosol generating device 100 or may be set by a user.

As another example, the heater assembly 1 may include an induction heater. In detail, the heater assembly 1 may include an electrically conductive coil for heating an aerosol generating article in an induction heating method, and the aerosol generating article may include a susceptor which may be heated by the induction heater. The heater 10 may be an electrically conductive coil.

Although embodiments describes that the heater assembly 1 is induction heater, embodiments are not limited by the type of the heater. For example, the heater assembly 1 can be implemented as an electric resistance heater.

For example, the heater assembly 1 may include a tube-type heating element, a plate-type heating element, a needle-type heating element, or a rod-type heating element, and may heat the inside or the outside of the aerosol generating article 200, according to the shape of the heating element.

Also, the aerosol generating device 100 may include a plurality of heaters. Here, the plurality of heaters may be inserted into the aerosol generating article 200 or may be arranged outside the aerosol generating article 200. Also, some of the plurality of heater assembly 1 may be inserted into the aerosol generating article 200 and the others may be arranged outside the aerosol generating article 200.

In addition, the shape of the heater assembly 1 is not limited to the shapes illustrated in FIG. 1 and may include various shapes.

The vaporizer 130 may generate aerosol by heating a liquid composition and the generated aerosol may pass through the aerosol generating article 200 to be delivered to a user. In other words, the aerosol generated via the vaporizer 130 may move along an air flow passage of the aerosol generating device 100 and the air flow passage may be configured such that the aerosol generated via the vaporizer 130 passes through the aerosol generating article 200 to be delivered to the user.

For example, the vaporizer 130 may include a liquid storage, a liquid delivery element, and a heating element, but it is not limited thereto. For example, the liquid storage, the liquid delivery element, and the heating element may be included in the aerosol generating device 100 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the vaporizer 130 or may be formed integrally with the vaporizer 130.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated.

For example, the vaporizer 130 may be referred to as a cartomizer or an atomizer, but it is not limited thereto.

The aerosol generating device 100 may further include general-purpose components in addition to the battery 110, the controller 120, the heater assembly 1, and the vaporizer 130. For example, the aerosol generating device 100 may include a display capable of outputting visual information and/or a motor for outputting haptic information. Also, the aerosol generating device 100 may include at least one sensor (a puff sensor, a temperature sensor, an aerosol generating article insertion detecting sensor, etc.). Also, the aerosol generating device 100 may be formed as a structure that, even when the aerosol generating article 200 is inserted into the aerosol generating device 100, may introduce external air or discharge internal air.

Although not illustrated in FIG. 1, the aerosol generating device 100 and an additional cradle may form together a system. For example, the cradle may be used to charge the battery 110 of the aerosol generating device 100. Alternatively, the heater assembly 1 may be heated when the cradle and the aerosol generating device 100 are coupled to each other.

The aerosol generating article 200 may be similar to a general combustive cigarette. For example, the aerosol generating article 200 may be divided into a first portion including an aerosol generating material and a second portion including a filter, etc. Alternatively, the second portion of the aerosol generating article 200 may also include an aerosol generating material. For example, an aerosol generating material made in the form of granules or capsules may be inserted into the second portion.

The first portion may be completely inserted into the aerosol generating device 100, and the second portion may be exposed to the outside. Alternatively, only a portion of the first portion may be inserted into the aerosol generating device 100, or a portion of the first portion and a portion of the second portion may be inserted thereinto. The user may puff aerosol while holding the second portion by the mouth of the user. In this case, the aerosol is generated by the external air passing through the first portion, and the generated aerosol passes through the second portion and is delivered to the user's mouth.

For example, the external air may flow into at least one air passage formed in the aerosol generating device 100. For example, opening and closing of the air passage and/or a size of the air passage formed in the aerosol generating device 100 may be adjusted by the user. Accordingly, the amount and the quality of smoking may be adjusted by the user. As another example, the external air may flow into the aerosol generating article 200 through at least one hole formed in a surface of the aerosol generating article 200.

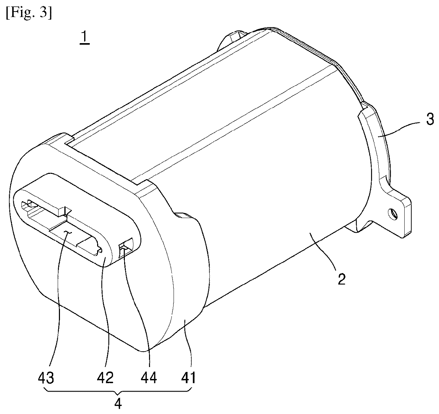

FIG. 2 is a front perspective view of the heater assembly for the aerosol-generating device according to an embodiment, and FIG. 3 is a rear perspective view of the heater assembly for the aerosol-generating device according to an embodiment.

Referring to FIGS. 2 and 3, the heater assembly 1 for the aerosol-generating device according to an embodiment may include a body 2, a first cover 3, and a second cover 4. However, components of the heater assembly 1 for the aerosol-generating device 1 are not limited thereto, other components may be added, or at least one component may be omitted according to embodiments.

The first cover 3 may be coupled to a side of the body 2. A holder 20 for supporting the aerosol-generating article 200 may be coupled to the first cover 3.

The second cover 4 may be coupled to another side of the body 2. That is, the first cover 3 and the second cover 4 may be coupled to different portions of the body 2, respectively.

The second cover 4 may include a second cover body 41, a second protruding member 42, a second hole 43, and a sealing insertion groove 44.

The second cover body 41 may function as a body of the second cover 4. The second cover body 41 may be coupled to the body 2 to be arranged at another side of the body 2. The second cover body 41 may be generally formed in a round plate shape, but this is merely an example, and may be formed in other shapes as long as the second cover body 41 may be arranged at the other side of the body 2.

The second protruding member 42 may protrude from the second cover body 41. The second protruding member 42 may be integrally formed with the second cover body 41. The second protruding member 42 may be generally formed in a round ring shape.

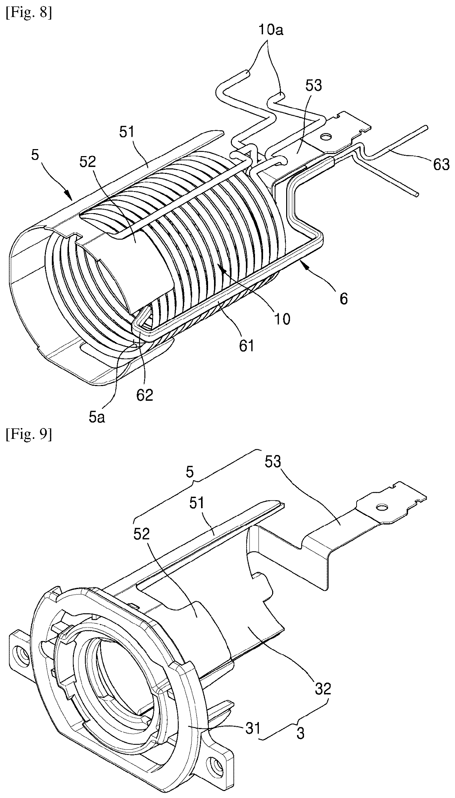

The second hole 43 may be formed in the second protruding member 42 for at least one of contact portions shown in FIG. 8, such as a heating contact portion 10a of the heater 10, an antenna contact portion 53 of the antenna 5, and a sensing contact portion 63 of the sensor 6, to penetrate. At least one of the heating contact portion 10a, the antenna contact portion 53, and the sensing contact portion 63 may penetrate through the second hole 43 and may be electrically connected to the battery 110 or the controller 120. The second hole 43 may penetrate through the second cover body 41 and the second protruding member 42. The second hole 43 may be formed in a greater size than each of the heating contact portion 10a, the antenna contact portion 53, and the sensing contact portion 63.

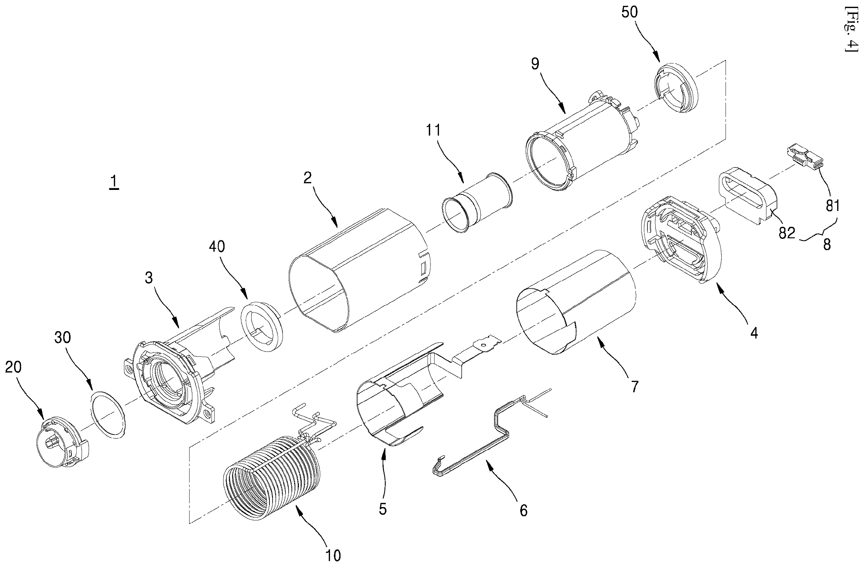

A portion of the lower sealing 8 (see FIG. 4) may be inserted into the sealing insertion groove 44. The sealing insertion groove 44 may be formed on an outer surface of the second protruding member 42. The sealing insertion groove 44 may be formed at opposite sides of the second protruding member 42.

FIG. 4 is an exploded perspective view of the heater assembly for the aerosol-generating device according to an embodiment.

Referring to FIG. 4, the heater assembly 1 for the aerosol-generating device according to an embodiment may further include the antenna 5, the sensor 6, the shielding portion 7, the lower sealing 8, the supporter 9, the heater 10, the susceptor 11, and the holder 20. However, components of the heater assembly 1 for the aerosol-generating device 1 are not limited thereto, other components may be added, or at least one component may be omitted according to embodiments.

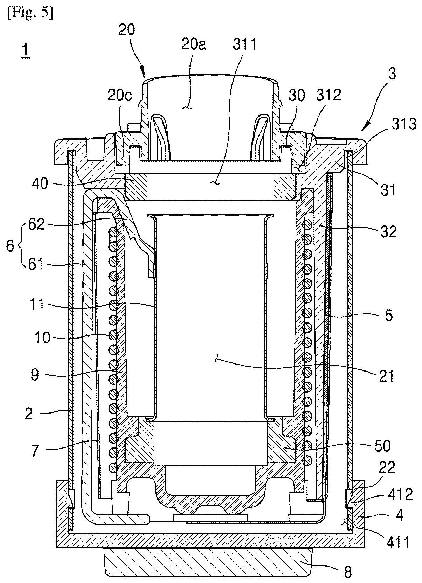

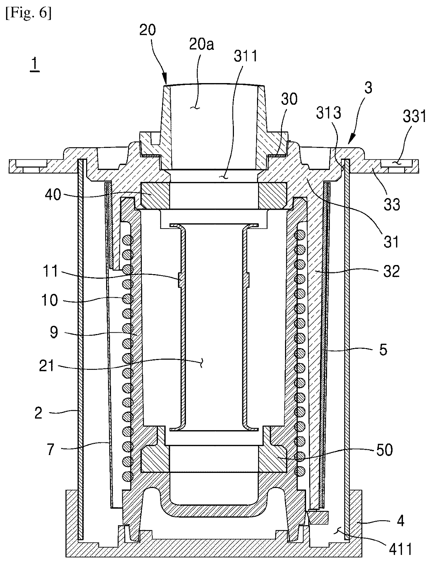

FIG. 5 is a cross-sectional view of the heater assembly for the aerosol-generating device according to an embodiment, taken along line V-V shown in FIG. 2; and FIG. 6 is a cross-sectional view of the heater assembly for the aerosol-generating device according to an embodiment, taken along line VI-VI shown in FIG. 2.

Referring to FIGS. 5 and 6, the heater assembly 1 for the aerosol-generating device according to an embodiment includes the heater 10 (e.g., an electrically conductive coil) configured to heat the aerosol-generating article 200, the body 2 arranged to surround the aerosol-generating article 200, the first cover 3 arranged at a side of the body 2 and including a first hole 311 through which the aerosol-generating article 200 is inserted, and a second cover 4 including a second hole 43 (see FIGS. 3, 12, and 13) through which a line for supplying power to the heater 10 penetrates to the outside of the heater assembly 1.

The first cover 3 is coupled to a side of the body, and the second cover 4 is coupled to another side of the body 2, to thereby form an accommodating space 21 to accommodate the aerosol-generating article.

A material that reflects heat generated from the heater 10 to the accommodating space 21 is deposited on at least a portion of an inner surface of at least one of the body 2, the first cover 3, and the second cover 4. Accordingly, the heater assembly 1 for the aerosol-generating device according to an embodiment may accomplish the following advantageous effects.

First, according to the heater assembly 1 for the aerosol-generating device according to an embodiment, the second cover 4, the first cover 3, and the body 2 may be arranged to completely surround the outside of the heater 10 and function as a physical barrier configured to prevent the heat, which is generated from the heater 10, from being discharged outside. Accordingly, the heater assembly 1 for the aerosol-generating device according to an embodiment may improve insulation performance by the physical barrier, and accordingly, power consumption for operation of the heater 10 may be reduced.

Second, the heater assembly 1 for the aerosol-generating apparatus according to an embodiment may reduce an amount of heat delivered to the aerosol-generating device 100, and therefore a temperature sensed by the user when holding the aerosol-generating device 100 may be reduced. Accordingly, the heater assembly 1 for the aerosol-generating device according to an embodiment may implement a safe usage environment for use of the aerosol-generating device 100.

Third, the deposition material may reflect the heat, which is generated from the heater 10, to the accommodating space 21, thereby reducing an amount of heat transmitted to the outside. Accordingly, the heater assembly 1 of the aerosol-generating device according to an embodiment may have improved insulation performance.

The above-stated three advantageous effects may be proved according to the following experiment.

### [Experiment]

First, a temperature profile of the heater assembly 1 for the aerosol-generating device according to an embodiment is set such that the susceptor 11 is heated to 270°C (Process 1).

Next, the susceptor 11 is heated for 270 seconds (Process 2).

Next, Process 1 and Process 2 are repeated three times (Process 3).

After five minutes, a temperature of the aerosol-generating device 100 is measured (Process 4).

Next, Process 1 to process 4 are repeated by using a heater assembly according to the related art (Comparative Example 1) and a heater assembly (Comparative Example 2) including an insulating structure of vacuum tube (Process 5).

Table 1 below shows a result of the experiment.

**[Table 1]**

| | A temperature of the aerosol-generating device |
|---|---|
| Eembodiment | 59.5°C |
| Comparative Example 1 | 87.3°C |
| Comparative Example 2 | 58.0°C |

As seen in Table 1 above, due to the heater assembly 1 for the aerosol-generating device according to an embodiment, the temperature of the aerosol-generating device 100 is about 27_lower than in the Comparative Example 1. Based thereon, according to the heater assembly 1 for the aerosol-generating device according to an embodiment, a general insulation performance of the aerosol-generating device 100 is improved than in the related art. In addition, it is found that the heater assembly 1 of the aerosol-generating device according to an embodiment has an insulation performance similar to that of Comparative Example 2 including an insulation structure of a vacuum tube. Hereinafter, the body 2, the first cover 3, and the second cover 4 will be described in detail with reference to the accompanying drawings.

Terms such as "upper" or "lower" written in the specification is intended to distinguish positions of components in a lower portion of the heater assembly 1 for the aerosol-generating device according to an embodiment, and are not intended to indicate particular directions.

Referring to FIGS. 5 and 6, the body 2 is arranged at the outside of the heater 10 to surround the heater 10. The body 2 may prevent the heat generated from the heater 10 from being discharged to the outside.

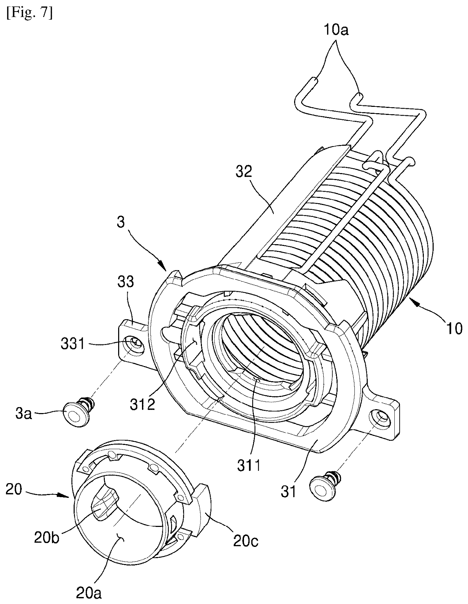

The accommodating space 21 for accommodating the aerosol-generating article 200 is formed in the body 2. When the aerosol-generating article 200 is accommodated in the accommodating space 21, the aerosol-generating article 200 may be arranged inside the susceptor 11. When the heating contact portion 10a of the heater is electrically connected to the battery 110 and the heater 10 heats the susceptor 11 by using power supplied from the battery 110, the aerosol-generating article 200 may be heated by induction heating method and may generate the aerosol. The heating contact portion 10a may include a power line to supply power to the heater 10 as described above. Although the susceptor 11 shown in FIG. 7 is formed in a hollow cylinder shape, this is merely an example. That is, as long as the aerosol-generating article 200 may be accommodated therein, the susceptor 11 may also be formed in other shapes. The susceptor 11 may be arranged inside the heater 10. The susceptor 11 may include a metal material.

A material that is capable of reflecting the heat generated by the heater 10 to the accommodating space 21 may be deposited on an inner surface of the body 2. The inner surface of the body 2 may be a surface of the body 2 facing the heater 10. The material may include a metal material such as silver (Ag).

Although the body 2 may be generally formed in a hollow cylinder shape, this is merely an example. That is, as long as the heater 10 may be accommodated therein, the body 2 may also be formed in other shapes. The body 2 may include a metal material. For example, the body 2 may include a material such as Steel Use Stainless (SUS) or aluminum.

Referring to FIGS. 5 and 6, the first cover 3 is arranged at a side of the body 2 to cover a side of the heater 10. The first cover 3 may prevent the heat, which is generated from the heater 10, from being discharged out of the heater assembly 1 through the side of the body 2. The side of the body 2 may include a top portion of the body 2.

The first cover 3 and the side of the body 2 may be coupled to each other to form the accommodating space 21 for accommodating the aerosol-generating article 200.

A material capable of reflecting the heat generated from the heater 10 to the accommodating space 21 may be deposited on an inner surface of the first cover 3. The inner surface of the first cover 3 may be a surface of the first cover 3 facing the heater 10.

The first cover 3 may include a polymer material having a high thermal resistance. For example, the first cover 3 may include a material such as polyether ether ketone (PEEK), polyphenylsulfone (PPSU), and polycarbonate (PC).

Referring to FIGS. 5 and 6, the first cover 3 may include the first cover body 31.

The first cover body 31 may function as a body of the first cover 3. The first cover body 31 may be coupled to the body 2 to be arranged at one side of the body 2. When the first cover body 31 is coupled to the body 2, the first cover body 31 may cover a side of the heater 10. The first cover body 31 may be generally formed in a round ring shape, but embodiments are not limited thereto. That is, the first cover body 31may be formed in other shapes as long as the first cover body 31 may be arranged at the side of the body 2 to cover the heater 10.

The first cover 3 may further include the first hole 311. The aerosol-generating article 200 may be inserted into the first hole 311. The first hole 311 may be formed in the first cover body 31 to penetrate through a top portion and a bottom portion of the first cover body 31.

Referring to FIG. 5, the first cover 3 may further include a holder insertion groove 312. A holder 20 may be inserted into the holder insertion groove 312. When the holder 20 is inserted into the holder insertion groove 312, the holder 20 may be coupled to the first cover 3. The holder insertion groove 312 may be formed on an upper surface of the first cover body 31.

Referring to FIG. 6, the first cover 3 may further include a first body insertion groove 313. A side of the body 2 may be inserted into the first body insertion groove 313. When the side of the body 2 is inserted into the first body insertion groove 313, the body 2 may be coupled to the first cover 3. Accordingly, the first cover 3 may support the side of the body 2. The first body insertion groove 313 may be formed in a lower surface of the first cover body 31.

Referring to FIGS. 5 and 6, the first cover 3 may further include a cover insulation member 32.

The cover insulation member 32 extends in a longitudinal direction of the heater 10. The cover insulation member 32 may be arranged between the heater 10 and the body 2. Accordingly, the heater assembly 1 for the aerosol-generating device according to an embodiment may implement a physical dual-layer barrier by the cover insulation member 32 and the body 2, which prevents the heat generated from the heater 10 from being discharged to the outside. The longitudinal direction of the heater 10 may indicate an extension direction of a longer side of the heater assembly 1 for the aerosol-generating device according to an embodiment.

The cover insulation member 32 may be extend to a greater length than the heater 10 in the longitudinal direction. Accordingly, an area of the cover insulation member 32, by which the heater 10 may be covered, may increase.

The cover insulation member 32 may be coupled to the first cover body 31 and may extend in the longitudinal direction of the heater 10. The cover insulation member 32 may be integrally formed with the first cover body 31.

When the first cover 3 is coupled to the body 2, the cover insulation member 32 may be inserted into the body 2 to surround a portion of the outside of the heater 10. That is, the side surface of the cover insulation member 32 may include an opening such that the heater 10 is partially surrounded by the cover insulation member 32.

Accordingly, compared with the Comparative Examples in which the cover insulation member 32 completely surrounds the outside of the heater 10, in the heater assembly 1 for the aerosol-generating device, the cover insulation member 32 may be easily inserted into the body 2. In the embodiments, in a process of inserting the cover insulation member 32 into the body 2, compared with the Comparative Examples, less interference occurs between the cover insulation member 32 and the body 2. Accordingly, in the heater assembly 1 for the aerosol-generating apparatus according to an embodiment, assembly of the first cover 3 and the body 2 may be eased.

Referring to FIG. 6, the first cover 3 may further include a first protruding member 33.

The first protruding member 33 may protrude outward from the first cover body 31. The first protruding member 33 may be arranged at both ends of the first cover body 31. The first protruding member 33, the cover insulation member 32, and the first cover body 31 may be integrally formed.

The first protruding member 33 may include a coupling hole 331. A coupling member 3a (shown in FIG. 7) for coupling the first cover 3 to the aerosol-generating device 100 may be inserted into the coupling hole 331. As the coupling member 3a is inserted into the coupling hole 331 and coupled to the aerosol-generating device 100, the first cover 3 may be fixed to the aerosol-generating device 100. The coupling member 3a may be a bolt. In this case, a screw thread may be formed in the coupling hole 331.

Referring to FIGS. 5 and 6, the second cover 4 is arranged at another side of the body 2 to cover another side of the heater 10. The second cover 4 may prevent the heat, which is generated from the heater 10, from being discharged to the outside through the other side of the body 2. The other side of the body 2 may be a bottom portion of the body 2.

The second cover 4 and the other side of the body 2 may be coupled to each other to form the accommodating space 21. That is, the body 2, the first cover 3, and the second cover 4 may be arranged to couple one another and completely surround the accommodating space 21.

A material capable of reflecting the heat generated from the heater 10 to the accommodating space 21 may be deposited on an inner surface of the second cover 4. The inner surface of the second cover 4 may be a surface of the second cover 4 facing the heater 10.

The second cover 4 may include a polymer material having a high thermal resistance. For example, the second cover 4 may include a material such as PEEK, PPSU, and PC.

Referring to FIGS. 5 and 6, the second cover 4 may further include a second body insertion groove 411.

The other side of the body 2 may be inserted into the second body insertion groove 411. When the other side of the body 2 is inserted into the second body insertion groove 411, the body 2 may be coupled to the second cover 4. Accordingly, the second cover 4 may support the other side of the body 2. The second body insertion groove 411 may be formed in the second cover body 41.

Referring to FIGS. 5 and 6, the second cover 4 may further include an engaging member 412.

The engaging member 412 may be inserted into a cover insertion groove 22 formed in the body 2. When the engaging member 412 is inserted into the cover insertion groove 22, the other side of the body 2 may be coupled to the second cover 4. Accordingly, the second cover 4 and the body 2 may be firmly coupled to each other. The engaging member 412 may protrude from the second cover body 41 toward the second body insertion groove 411. The engaging member 412 may be integrally formed with the second cover body 41.

Referring to FIGS. 5 and 6, the antenna 5 identifies whether the aerosol-generating article 200 is accommodated in the accommodating space 21. The antenna 5 may be connected to a battery 110 and the controller 120. The antenna 5 may include a metal material.

For example, when the aerosol-generating article 200 is accommodated in the accommodating space 21, the antenna 5 may identify the aerosol-generating article 200 accommodated in the accommodating space 21 and provide, to the controller 120, information regarding an accommodation state of the aerosol-generating article 200. Accordingly, the controller 120 may control the battery 110 to provide power to the heater 10.

As another example, when the aerosol-generating article 200 is separated from the accommodating space 21, the antenna 5 may identify the aerosol-generating article 200 being separated and provide, to the controller 120, information regarding a separation state of the aerosol-generating article 200. Accordingly, the controller 120 may control the battery 110 to block power provided to the heater 10.

The antenna 5 is arranged inside the body 2. The antenna 5 may be arranged between the cover insulation member 32 and the shielding portion 7 to surround at least a portion of the heater 10. Accordingly, the heater assembly 1 for the aerosol-generating device according to an embodiment may implement a physical three-layer barrier by the cover insulation member 32, the antenna 5, and the body 2, which prevents the heat generated from the heater 10 from being discharged to the outside.

Referring to FIGS. 5 and 6, the sensor 6 senses a temperature of the heater 10 and/or susceptor 11. As shown in FIG. 5, the sensor 6 may contact the susceptor 11. The sensor 6 may be connected to the battery 110 or the controller 120.

The sensor 6 may be arranged inside the body 2, and at least a portion of the sensor 6 may extend in the longitudinal direction of the heater 10. The sensor 6 may include a metal material.

Referring to FIG. 5, the sensor 6 may include a sensing body 61 and a bending member 62.

At least a portion of the sensing body 61 extends in the longitudinal direction of the heater 10. The sensing body 61 may be arranged between the body 2 and the shielding portion 7.

*The bending member 62 extends toward the susceptor 11 such that the sensor 6 contacts the susceptor 11. The bending member 62 may pass between the cover 3 and the supporter 9 and extend toward the susceptor 11. The bending member 62 may be connected to an upper portion of the sensing body 61.

Referring to FIGS. 5 and 6, the shielding portion 7 is arranged inside the body 2. The shielding portion 7 is arranged between the body 2 and the antenna 5 to surround at least a portion of the heater 10. Accordingly, the following advantageous effects may be achieved from the heater assembly 1 for the aerosol-generating device according to an embodiment.

First, in the heater assembly 1 for the aerosol-generating device according to an embodiment, the shielding portion 7 is arranged at the outside of the antenna 5, and accordingly, the possibility that the antenna 5 will recognize the electronic devices at the outside of the shielding portion 7 may be reduced. Accordingly, in the heater assembly 1 for the aerosol-generating device according to an embodiment, as the antenna 5 may only recognize whether the aerosol-generating article 200 is accommodated, the performance of the antenna 5 may be improved.

Second, the heater assembly 1 for the aerosol-generating device according to an embodiment may implement a physical quad-layer barrier by the cover insulation member 32, the antenna 5, the shielding portion 7, and the body 2, which prevents the heat generated from the heater 10 from being discharged to the outside. Accordingly, the heater assembly 1 of the aerosol-generating device according to an embodiment may have an improved insulation performance.

The shielding portion 7 may include a metal material. For example, the shielding portion 7 may include a material such as aluminum (Al) and silver (Ag).

Referring to FIGS. 5 and 6, the lower sealing 8 may seal a gap between the second cover 4 and at least one of the contact portions 10a, 53, and 63 (see FIG. 8). The lower sealing 8 may be coupled to the second cover 4. The lower sealing 8 may be coupled to the outside of the second protruding member 42 and the inside of the second protruding member 42. The lower sealing 8 may include rubber. The lower sealing 8 may include a first sealing 81 and a second sealing 82, and details thereof will be described later.

Referring to FIGS. 5 and 6, the supporter 9 is arranged inside the heater 10 and supports the heater 10. The heater 10 may be coupled to the supporter 9. Although the supporter 9 may be generally formed in a hollow cylinder shape, this is merely an example. That is, as long as the supporter 9 is capable of supporting the heater 10, it may be formed in other shapes.

The susceptor 11 may be arranged inside the supporter 9. Accordingly, the supporter 9 may prevent heat generated from the susceptor 11 from being discharged to the outside.

Referring to FIGS. 4 to 6, the heater assembly 1 for the aerosol-generating device according to an embodiment may further include a first sealing ring 30, a second sealing ring 40, and a third sealing ring 50.

The first sealing ring 30 may be arranged between the holder 20 and the first cover 3. The first sealing ring 30 may seal a gap between the holder 20 and the first cover 3.

The second sealing ring 40 may be arranged in the first cover 3. The second sealing ring 40 may be arranged inside the first cover body 31 to surround the first hole 311. At least a portion of the aerosol-generating article 200 may be inserted into the second sealing ring 40. When the aerosol-generating article 200 is accommodated in the accommodating space 21, the second sealing ring 40 may seal a gap between the aerosol-generating article 200 and the first cover body 31.

The third sealing ring 50 may be arranged at a bottom end of the susceptor 11 in the supporter 9. At least a portion of the aerosol-generating article 200 may be inserted into the third sealing ring 50. When the aerosol-generating article 200 is accommodated in the accommodating space 21, the third sealing ring 50 may seal a gap between the aerosol-generating article 200 and the supporter 9.

The first sealing ring 30, the second sealing ring 40, and the third sealing ring 50 may each include rubber. The first sealing ring 30, the second sealing ring 40, and the third sealing ring 50 may each be formed in a round ring shape, but the shape is not limited.

FIG. 7 is a perspective view of combination of a first cover, a heater, and a holder of a heater assembly for an aerosol-generating device according to an embodiment.

A holder 20 supports the aerosol-generating article 200. The holder 20 may include an insertion hole 20a through which the aerosol-generating article 200 is inserted, a ridge 20b protruding toward the insertion hole 20a and supporting the aerosol-generating article 200, and a holder protruding portion 20c protruding toward the first cover body 31 to be inserted into the holder insertion groove 312. When the holder protruding portion 20c is inserted into the holder insertion groove 312, the holder 20 may be coupled to the first cover body 31.

When the holder 20 is coupled to the first cover body 31, the insertion hole 20a of the holder 20 may communicate with the first hole 311 of the first cover body 31.

The holder 20 may include a plurality of ridges 20b. The plurality of ridges 20b may be arranged apart from one another in a circumstantial direction of the holder 20.

FIG. 8 is a cross-sectional view of a combination of the heater, the antenna, and the sensor in the heater assembly for the aerosol-generating device according to an embodiment; and FIG. 9 is a cross-sectional view of a combination of the cover and the antenna in the heater assembly for the aerosol-generating device according to an embodiment.

Referring to FIGS. 8 and 9, the antenna 5 may include an antenna body 51, an antenna extending portion 52, and the antenna contact portion 53.

As shown in FIG. 8, the antenna body 51 extends in the longitudinal direction of the heater 10, and is arranged to surround a portion of the heater 10. That is, a side surface of the antenna body 51 may include an opening such that the heater 10 is partially surrounded by the antenna body 51.

Accordingly, compared with the Comparative Examples in which the antenna body 51 completely surrounds the heater 10, in the heater assembly 1 for the aerosol-generating device according to an embodiment, the antenna body 51 may be easily inserted into the body 2. In the embodiments, in a process of inserting the antenna body 51 into the body 2, compared with the Comparative Examples, less interference occurs between the antenna cover 51 and the body 2. Accordingly, the heater assembly 1 for the aerosol-generating device according to an embodiment may case assembly of the antenna 5 and the body 2.

When the antenna body 51 extends in the longitudinal direction of the heater 10 and is arranged to surround a portion of the heater 10, the cover insulation member 32 may be arranged at a position corresponding to a position of the antenna body 51, as shown in FIG. 9. Accordingly, the antenna body 51 may support the cover insulation member 32 at the outside of the cover insulation member 32.

The antenna extending portion 52 is connected to the antenna body 51. The antenna extending portion 52 may include a first extending portion, which extends in a circumferential direction of the heater 10 from a side of the antenna body 51, and a second extending portion extending in the circumferential direction of the heater from another side of the antenna body 51.

Referring to FIG. 8, the antenna 5 may include a penetration portion 5a through which the bending member 62 of the sensor 6 penetrates. Accordingly, in the heater assembly 1 for the aerosol-generating device according to an embodiment, the sensor 6 may not be electrically connected to the antenna 5 while contacting the susceptor 11 positioned inside the heater 10. Accordingly, the heater assembly 1 for the aerosol-generating device according to an embodiment may reduce possibility of electrical short between the antenna 5 and the sensor 6. The penetration portion 5a may be a space between the first extending portion and the second extending portion.

Referring to FIGS. 8 and 9, the antenna contact portion 53 is connected to the antenna body 51, and arranged at a position apart from the antenna extending portion 52. The antenna contact portion 53 may be connected to the battery 110 and/or the controller 120. The antenna contact portion 53 may include a first contact member, which extends across the longitudinal direction of the heater 10, and a second contact member extending in the longitudinal direction of the heater. The antenna contact portion 53, the antenna extending portion 52, and the antenna body 51 may be integrally formed.

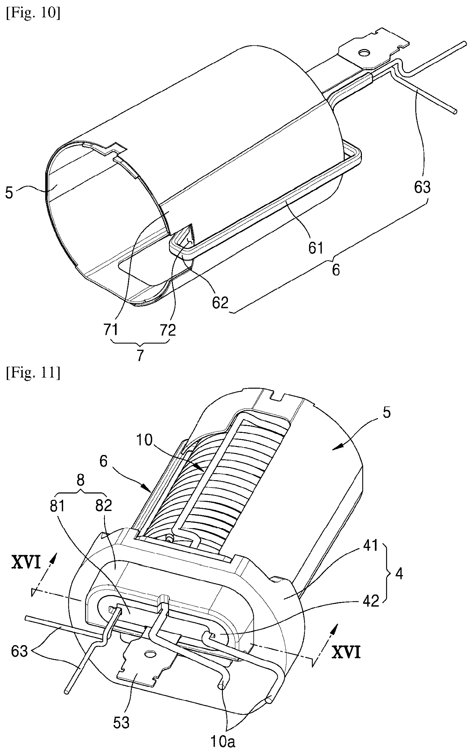

FIG. 10 is a perspective view of combination of an antenna, a sensor, and a shielding portion of a heater assembly for an aerosol-generating device according to an embodiment;

Referring to FIG. 10, the sensor 6 may include the sensing body 61, the bending member 62, and the sensing contact portion 63. Hereinafter, repeated description of the sensing body 61 and the bending member 62 described with reference to FIG. 5 will be omitted.

The sensing body 61 may include a first body extending in the longitudinal direction of the heater 10, a second body connected to the first body and extending across the longitudinal direction, and a third body connected to the second body and the sensing contact portion 63.

The bending member 62 may include a first bending member extending across the longitudinal direction and a second bending member connected to the first bending member and bent downward toward the susceptor 11.

The sensing contact portion 63 may be connected to the bottom of the sensing body 61. The sensing contact portion 63 may be connected to the battery 110 and/or the controller 120. The sensing contact portion 63 may include two contact members respectively extending different directions. The sensing contact portion 63, the bending member 62, and the sensing body 61 may be integrally formed.

Referring to FIG. 10, the shielding portion 7 may include a shielding body 71 and a sensor penetration groove 72.

The shielding body 71 may form the overall appearance of the shielding portion 7. The shielding body 71 may be arranged inside the body 2 to surround the antenna 5. The shielding body 71 may be formed in a hollow cylinder shape as a whole, but this is merely an example. That is, the shielding body 71 may be formed in other shapes as long as the shielding body 71 may be arranged outside the antenna 5.

The sensor penetration groove 72 may be a space through which the bending member 62 penetrates. Accordingly, the heater assembly 1 for the aerosol-generating device according to an embodiment may have a structure in which the shielding portion 7 and the sensor 6 are not electrically connected to each other while the sensor 6 contacts the susceptor 11 positioned inside the shielding portion 7. Accordingly, the heater assembly 1 for the aerosol-generating device according to an embodiment may reduce possibility of electrical short between the shielding portion 7 and the sensor 6. The sensor penetration groove 72 may be formed in the shielding body 71.

FIG. 11 is a rear perspective view of a heater assembly for an aerosol-generating device according to an embodiment.

Referring to FIG. 11, the heating contact portion 10a, the antenna contact portion 53, and the sensing contact portion 63 penetrate through the second hole 43 (see FIGS. 3 and 12-13). A lower sealing 8 may seal a gap between the second cover 4 and at least one of the heating contact portion 10a, the antenna contact portion 53, and the sensing contact portion 63. The lower sealing 8 may be coupled to the second protruding member 42.

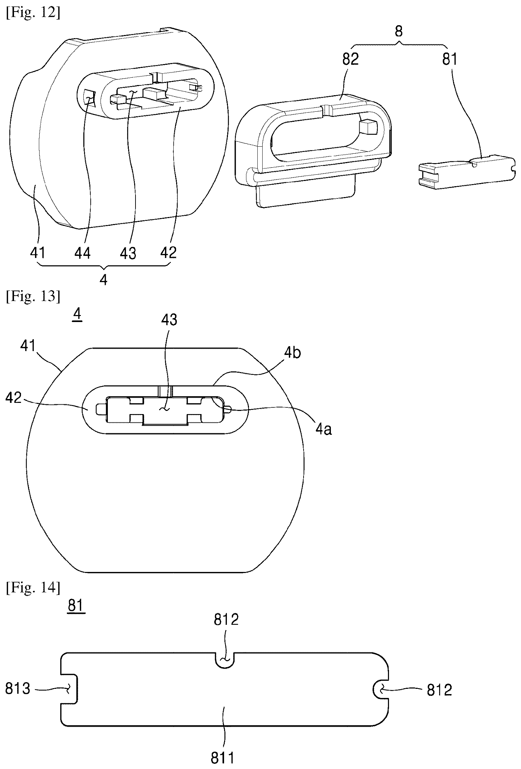

FIG. 12 is an exploded view of the second cover and the lower sealing in the heater assembly for the aerosol-generating device according to an embodiment, and FIG. 13 illustrates the second cover of the heater assembly for the aerosol-generating device according to an embodiment.

Referring to FIG. 12, the lower sealing 8 may include the first sealing 81 inserted into the second hole 43 and the second sealing 82 arranged apart from the first sealing 81.

The first sealing 81 may be inserted into the second hole 43 and contact an inner surface 4a (shown in FIG. 13) of the second protruding member 42 to seal the second hole 43. Therefore, the first sealing 81 may prevent the heat generated from the heater 10 from being discharged downward through the second hole 43. The inner surface 4a may be a surface of the second protruding member 42 facing the second hole 43.

The first sealing 81 may be inserted into the second hole 43 by an interference fit method. Accordingly, a sealing force of the first sealing 81 to seal the second hole 43 may be improved.

The second sealing 82 is arranged apart from the first sealing 81. The second sealing 82 may be coupled to an outer surface 4b (shown in FIG. 13) of the second protruding member 42. The outer surface 4b is a surface opposite to the inner surface 4a. The outer surface 4b of the second protruding member 42 may be a surface identical to the outer surface of the second cover 4. The second sealing 82 may be arranged to surround the second protruding member 42.

FIG. 14 illustrates a first sealing of a heater assembly for an aerosol-generating device according to an embodiment;

Referring to FIG. 14, the first sealing 81 includes a first sealing body 811, a first penetration groove 812, and a second penetration groove 813.

The first sealing body 811 is inserted into the second hole 43. The first penetration groove 812 and the second penetration groove 813 may be formed in the first sealing body 811. The first sealing body 811 may be formed in a rectangular shape as a whole. However, as long as the first sealing member 811 may be inserted into the second hole 43, it may also be formed in other shapes.

The first penetration groove 812 may be formed in the first sealing member 811 for the heating contact portion 10a to penetrate through. The first penetration groove 812 may be formed by processing a groove having a certain depth from an outer surface of the first sealing body 811. Although FIG. 14 illustrates two first penetration grooves 812, this is merely an example, and the number of first penetration groove 812 is not limited.

The second penetration groove 813 may be formed apart from the first penetration groove 812, and the sensing contact portion 63 may penetrate through the second penetration groove 813. The second penetration groove 813 may be formed by processing a groove having a certain depth from the outer surface of the first sealing body 811. Although FIG. 14 illustrates one second penetration groove 813, this is merely an example, and the number of second penetration groove 813 is not limited.

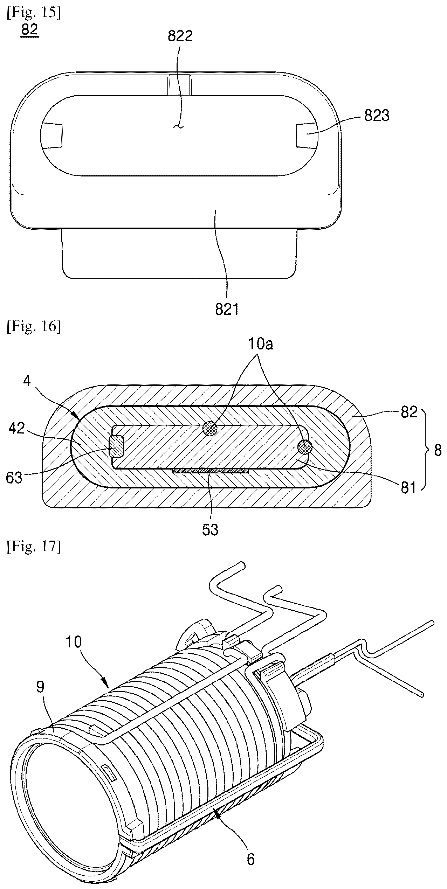

FIG. 15 is a diagram of a second sealing of a heater assembly for an aerosol-generating device according to an embodiment;

Referring to FIG. 15, the second sealing 82 may include a second sealing body 821, a second cover insertion groove 822, and a sealing protruding portion 823.

The second sealing body 821 is coupled to the second protruding member 42 of the second cover 4. The second cover insertion groove 822 and the sealing protruding portion 823 may be formed in the second sealing body 821. The second sealing body 821 may function as a body of the second sealing 82.

The second protruding member 42 of the second cover 4 may be inserted into the second cover insertion groove 822. For example, the second protruding member 42 may be inserted into the second cover insertion groove 822 in an interference fit method, such that a gap may not be formed between the second protruding member 42 and the second sealing body 821.

The sealing protruding portion 823 protrudes toward the second cover insertion groove 822. When the second protruding member 42 of the second cover 4 is inserted into the second cover insertion groove 822 of the second sealing 82, the sealing protruding portion 823 is inserted into the sealing insertion groove 44 formed in the outer surface 4b of the second protruding member 42 (see FIG. 12). Accordingly, the second cover 4 and the second sealing 82 may be firmly coupled to each other. The sealing protruding member 823 may be formed at different positions on the inner surface of the second sealing body 821. The sealing protruding portion 823 may be integrally formed with the second sealing body 821.

FIG. 16 is a cross-sectional view of a heater assembly for an aerosol-generating device according to an embodiment, taken along line XVI-XVI shown in FIG. 11.

When the first sealing 81 is inserted into the second hole 43, as shown in FIG. 16, the heating contact portion 10a, the antenna contact portion 53, and the sensing contact portion 63 may be arranged between the first sealing 81 and the second cover 4. Accordingly, even when vibration or shaking is applied to the heater assembly 1 for the aerosol-generating device according to an embodiment, movements of the heating contact portion 10a, the antenna contact portion 53, and the sensing contact portion 63 may be limited.

When the first sealing 81 is inserted into the second hole 43 by the interference fit method, the first sealing 81 may press the heating contact portion 10a, the antenna contact portion 53, and the sensing contact portion 63 toward the inner surface 42 of the second protruding member 42.

Hereinafter, a process of assembling the first sealing 81, the second cover 4, and the heating contact portion 10a, the antenna contact portion 53, and the sensing contact portion 63 will be described.

First, the heating contact portion 10a, the antenna contact portion 53, and the sensing contact portion 63 are run through the second hole 43. The heating contact portion 10a, the antenna contact portion 53, and the sensing contact portion 63 may simultaneously or sequentially be ran through the second hole 43.

As the second hole 43 is greater than a size of each of the heating contact portion 10a, the antenna contact portion 53, and the sensing contact portion 63, the heating contact portion 10a, the antenna contact portion 53, and the sensing contact portion 63 may easily penetrate through the second hole 43.

Next, the first sealing 81 is inserted into the second hole 43. In this case, the heating contact portion 10a is inserted into the first penetration groove 812, the antenna contact portion 53 is on the inner surface 4a of the second protruding member 42, and the sensing contact portion 63 may be inserted into the second penetration groove 813.

If the first sealing 81 is first inserted into the second hole 43 before the heating contact portion 10a, the antenna contact portion 53, and the sensing contact portion 63, it is difficult to pass the heating contact portion 10a, the antenna contact portion 53, and the sensing contact portion 63 through the second hole 43. As a result, the process of assembling the first sealing 81, the second cover 4, and the heating contact portion 10a, the antenna contact portion 53, and the sensing contact portion 63 cannot be easily performed.

In this regard, according to an embodiment, the heating contact portion 10a, the antenna contact portion 53, and the sensing contact portion 63 are first inserted into the second hole 43, and then the first sealing 81 is inserted into the first hole 43. Accordingly, the first sealing 81, the second cover 4, and the heating contact portion 10a, the antenna contact portion 53, and the sensing contact portion 63 may be easily assembled.

FIG. 17 is a perspective view of a combination of the supporter, the heater, and the sensor of the heater assembly for the aerosol-generating device according to an embodiment.

Referring to FIG. 17, the heater 10 may be wound around the supporter 9. Accordingly, the supporter 9 may support the heater 10.

In the heater assembly 1 for the aerosol-generating device according to an embodiment, the supporter 9 may also support the sensor 6. To do so, the supporter 9 may include a groove into which the bending member 62 of the sensor 6 is inserted. As the bending member 62 is inserted into the groove, the supporter 9 may support the sensor 6. Accordingly, the position of the sensor 6 may be fixed even when vibration or shaking is applied to the heater assembly 1 for the aerosol-generating device according to an embodiment, and therefore, the sensor 6 may stably sense a temperature of the heater 10 or the susceptor 11.

For example, the supporter 9 may include a metal material. For example, the supporter 9 may include a material such as SUS or aluminum. As another embodiment, the supporter 9 may include a polymer material having a high thermal resistance. For example, the supporter 9 may include a material such as PEEK, PPSU, and PC.

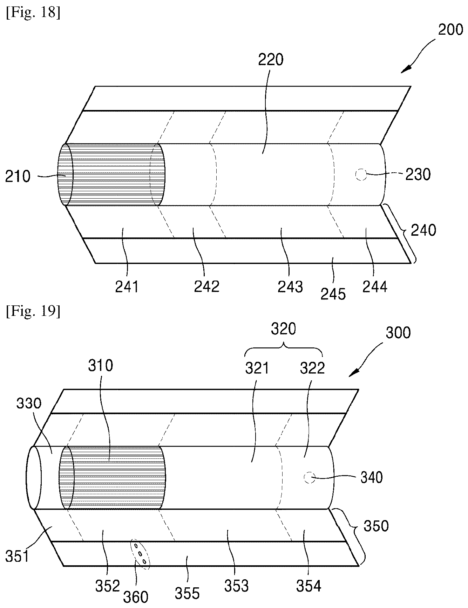

Hereinafter, the examples of the aerosol generating article 200 will be described with reference to FIGS. 18 and 19.

FIGS. 18 and 19 illustrate examples of the aerosol generating article.

Referring to FIG. 18, the aerosol generating article 200 includes a tobacco rod 210 and a filter rod 220. The first portion may include the tobacco rod 210, and the second portion may include the filter rod 220.

The filter rod 220 includes a single segment, but is not limited thereto. In other words, the filter rod 220 may include a plurality of segments. For example, the filter rod 220 may include a first segment configured to cool an aerosol and a second segment configured to filter a certain component included in the aerosol. Also, as necessary, the filter rod 220 may further include at least one segment configured to perform other functions.

The aerosol generating article 200 may be packaged by at least one wrapper 240. The wrapper 240 may have at least one hole through which external air may be introduced or internal air may be discharged. For example, the aerosol generating article 200 may be packaged by one wrapper 240. As another example, the aerosol generating article 200 may be doubly packaged by two or more wrappers 240. For example, the tobacco rod 210 may be packaged by a first wrapper 241, and the filter rod 220 may be packaged by wrappers 242, 243, 244. Also, the entire aerosol generating article 200 may be re-packaged by another single wrapper 245. When the filter rod 220 includes a plurality of segments, each segment may be packaged by wrappers 242, 243, 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected to the tobacco rod 210.

The tobacco rod 210 may be manufactured in various forms. For example, the tobacco rod 210 may be formed as a sheet or a strand. Also, the tobacco rod 210 may be formed as a pipe tobacco, which is formed of tiny bits cut from a tobacco sheet. Also, the tobacco rod 210 may be surrounded by a heat conductive material. For example, the heat conductive material may be, but is not limited to, a metal foil such as aluminum foil. For example, the heat conductive material surrounding the tobacco rod 210 may uniformly distribute heat transmitted to the tobacco rod 210, and thus, the heat conductivity applied to the tobacco rod may be increased and taste of the tobacco may be improved. Also, the heat conductive material surrounding the tobacco rod 210 may function as a susceptor heated by the induction heater. Here, although not illustrated in the drawings, the tobacco rod 210 may further include an additional susceptor, in addition to the heat conductive material surrounding the tobacco rod 210.

The filter rod 220 may include a cellulose acetate filter. Shapes of the filter rod 220 are not limited. For example, the filter rod 220 may include a cylinder-type rod or a tube-type rod having a hollow inside. Also, the filter rod 220 may include a recess-type rod. When the filter rod 220 includes a plurality of segments, at least one of the plurality of segments may have a different shape.

The filter rod 220 may be formed to generate flavors. For example, a flavoring liquid may be injected onto the filter rod 220, or an additional fiber coated with a flavoring liquid may be inserted into the filter rod 220.

Also, the filter rod 220 may include at least one capsule 230. Here, the capsule 230 may generate a flavor or an aerosol. For example, the capsule 230 may have a configuration in which a liquid containing a flavoring material is wrapped with a film. For example, the capsule 230 may have a spherical or cylindrical shape, but is not limited thereto.

When the filter rod 220 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

Referring to FIG. 19, the aerosol generating article 300 may further include a front-end plug 330. The front-end plug 330 may be located on one side of the tobacco rod 310 which is opposite to the filter rod 320. The front-end plug 330 may prevent the tobacco rod 310 from being detached outwards and prevent the liquefied aerosol from flowing from the tobacco rod 310 into the aerosol generating device (100 of FIG. 1) , during smoking.

The filter rod 320 may include a first segment 321 and a second segment 322. Here, the first segment 321 may correspond to the first segment of the filter rod 220 of FIG. 18, and the second segment 322 may correspond to the third segment of the filter rod 220 of FIG. 18.

A diameter and a total length of the aerosol generating article 300 may correspond to a diameter and a total length of the aerosol generating article 200 of FIG. 18. For example, the length of the front-end plug 330 is about 7 mm, the length of the tobacco rod 310 is about 15 mm, the length of the first segment 321 is about 12 mm, and the length of the second segment 322 is about 14 mm, but it is not limited thereto.

The aerosol generating article 300 may be packaged using at least one wrapper 350. The wrapper 350 may have at least one hole through which external air may be introduced or internal air may be discharged. For example, the front end plug 330 may be packaged by a first wrapper 351, the tobacco rod 310 may be packaged by a second wrapper 352, the first segment 321 may be packaged by a third wrapper 353, and the second segment 322 may be packaged by a fourth wrapper 354. Further, the entire aerosol generating article 300 may be repackaged by a fifth wrapper 355.

In addition, at least one perforation 360 may be formed in the fifth wrapper 355. For example, the perforation 360 may be formed in a region surrounding the tobacco rod 310, but is not limited thereto. The perforation 360 may serve to transfer heat generated by the heater the inside of the tobacco rod 310.

In addition, at least one capsule 340 may be included in the second segment 322. Here, the capsule 340 may generate a flavor or an aerosol. For example, the capsule 340 may have a configuration in which a liquid containing a flavoring material is wrapped with a film. For example, the capsule 340 may have a spherical or cylindrical shape, but is not limited thereto.

The one or more embodiments may also be implemented in the form of a recording medium including instructions executable by a computer, such as a program module executable by a computer. A computer-readable medium may be any available media that may be accessed by a computer and includes both volatile and nonvolatile media, and removable and non-removable media. In addition, the computer-readable medium may include a computer storage medium and a communication medium. The computer storage includes both volatile and nonvolatile, and removable and non-removable media implemented in any method or technology for storage of information such as computer readable instructions, data structures, program modules or other data. Communication medium may include computer readable instructions, data structures, other data in non-transitory data signals, such as program modules.

Those of ordinary skill in the art related to this embodiment understand that it may be implemented in a modified form without departing from the scope of the disclosure. Therefore, the embodiments of the disclosure should be considered as illustrative examples only, and should not be construed as limiting the scope of the disclosure. The scope of the present disclosure is described in the claims rather than the foregoing description, and any modifications, substitutions and improvements of the embodiments of the disclosure should be construed as being included in the present disclosure. It follows a list of examples:
[Example 1] A heater assembly for an aerosol-generating device, the heater assembly comprising:
   a heater configured to heat an aerosol-generating article;
   a body arranged to surround the aerosol-generating article;
   a first cover coupled to a side of the body and comprising a first hole for receiving the aerosol-generating article; and
   a second cover coupled to another side of the body and comprising a second hole for receiving a power line for supplying power to the heater,
   wherein an accommodating space for accommodating the aerosol-generating article is formed by the first cover, the body, and the second cover, and
   a material configured to reflect the heat generated from the heater to the accommodating space is deposited on an inner surface of at least one of the body, the first cover, and the second cover.
[Example 2] The heater assembly of example 1, wherein the first cover comprises a cover insulation member extending in a length direction of the heater and arranged between the heater and the body.
[Example 3] The heater assembly of example 2, wherein the cover insulation member partially surrounds the heater.
[Example 4] The heater assembly of example 1, wherein the first cover comprises:
   a first cover body comprising an insertion hole into which the aerosol-generating article is to be inserted; and
   a first protruding member protruding from the first cover body and including a coupling hole for receiving a coupling member for coupling the first cover to the aerosol-generating device.
[Example 5] The heater assembly of example 1, further comprising
   an antenna arranged inside the body to surround at least a portion of the heater and configured to recognize whether the aerosol-generating device is accommodated in the accommodating space.
[Example **6]** The heater assembly of example 5, wherein
   the antenna comprises an antenna body extending in a length direction of the heater and surrounding at least a portion of the heater, and
   the first cover comprises a cover insulation member extending in the length direction and arranged at a position corresponding to the antenna body.
[Example **7]** The heater assembly of example 5, further comprising
   a sensor arranged inside the body and configured to sense a temperature of the heater,
   wherein the antenna comprises a penetration portion through which a portion of the sensor penetrates.
[Example 8] The heater assembly of example 5, further comprising a shielding portion arranged between the antenna and the body to surround at least a portion of the antenna.
[Example 9] The heater assembly of example 8, further comprising
   a sensor arranged inside the body and configured to sense a temperature of the heater,
   wherein the shielding portion comprises a sensor penetration groove through which a portion of the sensor penetrates.
[Example **10]** The heater assembly of example 1, further comprising
   a lower sealing coupled to the second cover,
   wherein the second cover comprises an inner surface facing the second hole, and
   the lower sealing comprises a first sealing that fills the second hole by contacting the inner surface of the second cover.
[Example 11] The heater assembly of example 10, wherein the first sealing is inserted into the second hole by an interference fit manner.
[Example **12]** The heater assembly of example 10, wherein the first sealing comprises:
   a first sealing body inserted into the second hole;
   a first penetration groove formed in the first sealing body such that a portion of the heater penetrates through the first penetration groove; and
   a second penetration groove formed in the first sealing body apart from the first penetration groove such that a portion of the sensor penetrates through the second penetration groove.
[Example 13] The heater assembly of example 10, wherein
   the second cover further comprises an outer surface opposite to the inner surface,
      and
   the lower sealing further comprises a second sealing arranged at an outer surface of the second cover.
[Example **14]** The heater assembly of example 1, further comprising a supporter arranged in the heater and supporting the heater.
[Example 15] An aerosol-generating device comprising:
   a heater assembly of any one of examples 1 to 14;
   a battery configured to supply power to the heater assembly; and
   a controller configured to control operations of the heater assembly.

## Claims

1. A heater assembly comprising:
a body arranged at the outside of an electrically conductive coil and forming an accommodating space for accommodating an aerosol-generating article;
a susceptor disposed to surround the aerosol-generating article, when the aerosol-generating article is accommodated in the accommodating space, the susceptor being configured to be heated by the electrically conductive coil, and configured to heat the aerosol-generating article;
the electrically conductive coil disposed to surround the susceptor and configured to heat the susceptor by an induction heating method;
a supporter being wound with the coil and accommodating the susceptor inside, the supporter being configured to support the coil;
a holder supporting the aerosol-generating article; and
a shielding portion disposed inside the body and surrounding at least a portion of the coil.

2. The heater assembly of claim 1, further comprising a first cover disposed at one side of the body.

3. The heater assembly of claim 2, wherein the first cover includes a first hole into which the aerosol-generating article is inserted.

4. The heater assembly of claim 2 or 3, further comprising a second cover disposed at another side of the body.

5. The heater assembly of claim 1, wherein the supporter is disposed inside the coil.

6. The heater assembly of claim 5, wherein the first cover, the body, and the second cover are arranged to couple one another and completely surround the accommodating space, and the first cover, the second cover, the body, and the shielding portion provide a physical barrier configured to prevent heat from being discharged outside.

7. An aerosol-generating device comprising:
the heater assembly according to any one of the preceding claims;
a battery configured to supply power to the heater assembly; and
a controller configured to control power supplied from the battery to the heater assembly.
